# EUROPEAN PATENT APPLICATION

(11) **EP 4 644 079 A1**
(43) Date of publication of application: **05.11.2025**
(21) Application number: 24382483.6
(22) Date of filing: 03.05.2024
(51) Int. Cl.: B29C 33/30, B29C 33/42, F16B 21/16

(54) **DEVICE FOR EXTRACTING PIECES**

(71) Applicant: Comercial de Utiles y Moldes, S.A., 08960 Sant Just Desvern, Barcelona (ES)
(72) Inventor: NAVARRA PRUNA, Alberto, 08960 SANT JUST DESVERN (Barcelona) (ES)
(74) Representative: Herrero & Asociados, S.L.

(57) **Abstract**

The extraction device comprises a casing (1) that houses a piece (2); a retaining element (3), movable between a retention position and an extraction position; a sleeve (4) movable between the retention position, in which a retaining element (3) is located inside a cavity (5) of the sleeve (4) to house the retaining element (3), and the extraction position, in which the retaining element (3) is located outside the cavity (5) of the sleeve (4); in which the casing (1) comprises an air inlet (6), the injection of air through the inlet (6) causing the displacement of the sleeve (4).

It allows providing a device for extracting pieces in which the extraction of pieces can be carried out in a simple, fast and safe way.

## Description

### Object of the invention

The present invention relates to a device for extracting pieces, for example, for the extraction of mold pieces, such as the pieces of a mold dater or interchangeable inserts.

### Background of the invention

In a mold it is necessary to change some of its pieces periodically. These pieces are housed in a casing, and mechanical tools are usually used to remove them from the casing, which are used by expert operators.

For example, one of the pieces must be changed periodically, they are the pieces of a date stamp, to indicate on the object manufactured using the mold its manufacturing date or another example, inserts with logos of different brands using the same mold for production of its plastic pieces.

The replacing of these pieces has the disadvantage that it requires a considerable period of time, which has an impact on mold productivity. In addition, pieces can accidentally fall off, which is an additional inconvenience because they can be damaged and requires extra work to fix them.

### Description of the invention

Therefore, an objective of the present invention is to provide a device for extracting pieces in which the extraction of pieces can be carried out in a simple, fast and safe manner.

With the device for extracting pieces of the invention, the aforementioned drawbacks are solved, presenting other advantages that will be described below.

The device for extracting pieces according to the present invention is described in claim 1, and the dependent claims include additional features that are optional.

In particular, the device for extracting pieces, comprising:
- a casing that houses a piece;
- at least one retaining element, movable between a retention position, in which the at least one retaining element is pushed against the piece, retaining it, and an extraction position, in which the at least one retaining element is not pushed against the piece;
- a sleeve movable between the retention position, in which the at least one retaining element is located inside at least one cavity of the sleeve to house the at least one retaining element, and the extraction position, in which that the at least one retaining element is located outside the at least one cavity of the sleeve;
wherein the casing comprises an air inlet, the injection of air through the inlet causing the displacement of the sleeve.

Therefore, the piece moves when injecting air, not requiring the use of a tool. Furthermore, when air is injected, the piece remains in the extraction position, but is not completely separated from the casing, preventing it from accidentally falling and allowing a user to manually extract the piece, without requiring the removal of other pieces.

Furthermore, the device for extracting pieces according to the present invention also preferably comprises a body in which the at least one retaining element is housed, and may also comprise a spring located between the sleeve and the body, which pushes the sleeve towards the retention position.

According to a preferred embodiment, the at least one retaining element are balls, and the sleeve comprises a stem housed inside it, which is movable inside said sleeve.

Furthermore, the casing may comprise an external thread, to regulate its mounting position in the mold.

### Brief description of the drawings

For a better understanding of what has been explained, some drawings are attached in which, schematically and only as a non-limiting example, a practical case of embodiment is shown.
Figure 1 is a longitudinal sectional view of the device for extracting pieces in the retention position;
Figure 2 is a sectional view of a detail of the device for extracting pieces of Figure 1;
Figure 3 is a longitudinal sectional view of the device for extracting pieces in the extraction position; and
Figure 4 is a sectional view of a detail of the device for extracting pieces of Figure 3.

### Description of a preferred embodiment

The figures show the device for extracting pieces according to the present invention, which comprises a casing (1) that houses a piece (2). This casing (1) comprises an air inlet (6) preferably located at one end of said casing (1).

This piece (2) can be, for example, a piece of a mold, in particular, a piece of a dater of a mold or an insert, comprising a shaft (10), which is the piece of the piece (2) which is housed in the casing (1).

The device for extracting pieces according to the present invention also comprises a sleeve (4) located inside the casing (1) and provided with one or more cavities (5), a body (7) provided with through holes (11) or a slot to house one or more retaining elements (3) and a spring (8) located between the body (7) and the sleeve (4).

Furthermore, the sleeve (4) comprises, according to the embodiment shown, a stem (9) housed inside it, which can move inside the sleeve (4).

The retaining elements (3) according to the represented embodiment are balls, the operation of which will be described below.

Both the sleeve (4) and the retaining elements (3) are movable between a retention position and an extraction position.

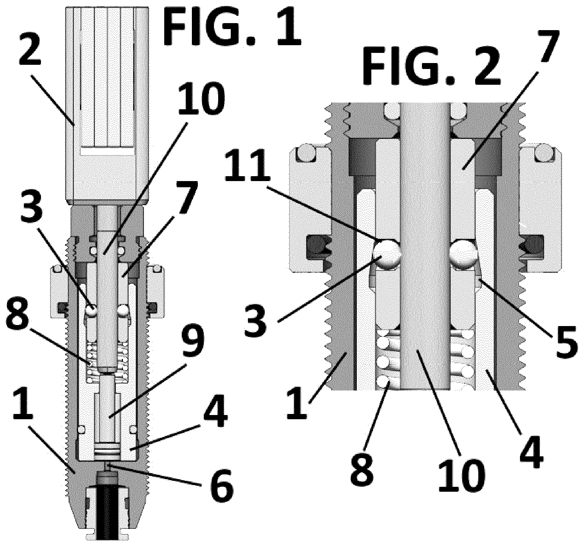

The retention position is shown in figures 1 and 2. In this position, the retaining elements (3) are pressed against the piece (2), in particular against the shaft (10) of the piece (2), by the sleeve (4). This is because the retaining elements (3) are located outside the cavities (5) and in contact with the inner wall of the sleeve (4).

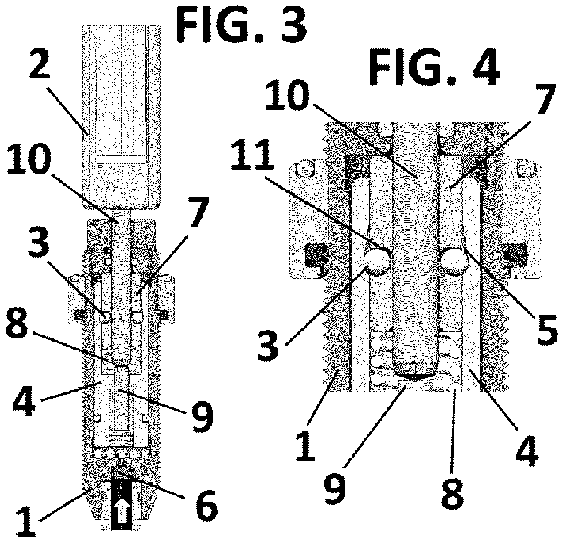

To move to the extraction position, pressurized air is introduced through the air inlet (6). The air pressure causes the sleeve (4) to move in the direction indicated by the arrows in figure 3, against the action of the spring (8).

When the sleeve (4) moves, when the retaining elements (3) are in front of the cavities (5), they will enter them, so that they will no longer press against the shaft (10) of the piece (2), the stem (9) moves inside the sleeve (4), slightly pushing the shaft (10) of the piece (2), causing the piece (2) to come out of the casing and facilitating its removal manually, but without risk of accidentally falling.

At the moment a new piece (2) with its corresponding shaft (10) is introduced, the sleeve (4) will return to its retention position due to the effect of the spring (8), and the retaining elements (3) will also return. will be placed in their retention position.

It should also be noted that the casing (1) has an external thread, so that its position can be adjusted, for example, when mounted in a mold. Thus, by inserting a tool, for example, an Allen key, inside the casing (1) it is possible to vary its mounting position in a mold.

Although reference has been made to a specific embodiment of the invention, it is evident to a person skilled in the art that the device for extracting pieces described is susceptible to numerous variations and modifications, and that all the details mentioned can be replaced by others technically equivalent, without departing from the scope of protection defined by the attached claims.

## Claims

1. Device for extracting pieces, comprising:
- a casing (1) that houses a piece (2);
**characterized in that** the device also comprises:
- at least one retaining element (3), movable between a retention position, wherein the at least one retaining element (3) is pushed against the piece (2), retaining it, and an extraction position, in which that the at least one retaining element (3) is not pushed against the piece (2);
- a sleeve (4) movable between the retention position, wherein the at least one retaining element (3) is located inside at least one cavity (5) of the sleeve (4) to house the at least one retaining element (3), and the extraction position, wherein the at least one retaining element (3) is located outside the at least one cavity (5) of the sleeve (4);
wherein the casing (1) comprises an air inlet (6), the injection of air through the inlet (6) causing the displacement of the sleeve (4).

2. Device for extracting pieces according to claim 1, which also comprises a body (7) in which the at least one retaining element (3) is housed.

3. Device for extracting pieces according to claim 2, which also comprises a spring (8) located between the sleeve (4) and the body (7), which pushes the sleeve (4) towards the retention position.

4. Device for extracting pieces according to claim 1, wherein the at least one retaining element (3) are balls.

5. Device for extracting pieces according to any one of the previous claims, wherein the sleeve (4) comprises a stem (9) housed inside it, which is movable inside said sleeve (4).

6. Device for extracting pieces according to any one of the previous claims, wherein the casing (1) comprises an external thread.
